(19) 
Europäisches
Patentamt
European
Patent Office
Office européen
des brevets

(11) **EP 1 867 677 A1**

(12) **EUROPEAN PATENT APPLICATION**
published in accordance with Art. 158(3) EPC

(43) Date of publication:
**19.12.2007  Bulletin 2007/51**

(51) Int Cl.:
*C08J 9/18* (2006.01)   *C08J 9/232* (2006.01)
*C08L 101/16* (2006.01)

(21) Application number: **06729498.3**

(22) Date of filing: **20.03.2006**

(86) International application number:
**PCT/JP2006/305530**

(87) International publication number:
**WO 2006/103972 (05.10.2006 Gazette 2006/40)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.03.2005  JP 2005088291**

(71) Applicant: **Kaneka Corporation
Kita-ku
Osaka-shi, Osaka 530-8288 (JP)**

(72) Inventors:
• **MIYAGAWA, Toshio c/o Kaneka Corporation
Osaka 566-0072 (JP)**
• **HIROSE, Fuminobu c/o Kaneka Corporation
Osaka, 566-0072 (JP)**
• **SENDA, Kenichi
inishi, Settsu-shi, Osaka, 5660072 (JP)**

(74) Representative: **Vossius & Partner
Siebertstrasse 4
81675 München (DE)**

(54)   **FOAMED POLYHYDROXYALKANOATE RESIN PARTICLES**

(57)   It is intended to provide polyhydroxyalkanoate resin foamed particles having a biodegradability and favorable properties, a molded article thereof and a method of producing these resin foamed particles. Namely, resin foamed particles obtained by foaming a copolymer (hereinafter referred to as poly(3-hydroxyalkanoate); abbreviated as P3HA), which is produced by a microorganism, has a weight-average molecular weight of from 50000 to 2000000 and has a repeating unit represented by the general formula (1): [-CHR-CH$_2$CO-O-] (wherein R represents an alkyl group represented by C$_n$H$_{2n+1}$ and n is an integer of from 1 to 15), a molded article formed by using these foamed particles and a method of producing these foamed particles.

EP 1 867 677 A1

Printed by Jouve, 75001 PARIS (FR)

## Description

Technical Field

The present invention relates to biodegradable polyhydroxyalkanoate resin foamed particles, a molded product thereof, and a method of preparing such resin foamed particles.

Background Art

As environmental problems caused by waste plastics have been brought into the public eyes recently, attention is being focused on biodegradable plastics which, after use thereof, can be decomposed into water and carbon dioxide by activities of microorganisms. Generally, such biodegradable plastics can be roughly divided into three types: 1) microbial product type aliphatic polyesters such as polyhydroxyalkanoates (particularly poly(3-hydroxyalkanoates), or P3HA in the present invention); chemically synthesized type aliphatic polyesters such as polylactic acid and polycaprolactone; and natural polymeric substances such as starch and cellulose acetate. The majority of chemically synthesized type aliphatic polyesters is not subject to anaerobic degradation and hence has limited degradation conditions when disposed of. Polylactic acid and polycaprolactone have a problem with heat resistance. Starch and cellulose acetate involve problems associated with their non-thermoplasticity, brittleness, and poor water resistance. On the other hand, P3HA has advantageous characteristics that: P3HA has excellent degradability under any condition, whether aerobic or anaerobic; P3HA fails to produce any toxic gas when burned; P3HA is excellent in water resistance and steam permeation resistance; P3HA is a plastic which is derived from microorganisms using a vegetable material and which can be given a high molecular weight without a crosslinking process or a like process; and P3HA is carbon-neutral, or having no possibility of increasing the amount of carbon dioxide on Earth. Particularly since P3HA is derived from a vegetable material, P3HA is receiving attention to on its carbon dioxide absorption and fixation effect and is expected to contribute to global warming prevention measures according to Kyoto Protocol. In cases where P3HA is a copolymer, it is possible to vary physical properties of P3HA including melting point, heat resistance and flexibility by controlling the composition ratio between the constituent monomers.

As described above, polyhydroxyalkanoates, which are produced from a vegetable material, has no problem associated with its waste and exhibits excellent environmental compatibility and wide physical property controllability. For this reason, demands exist for molded products of polyhydroxyalkaoate which are applicable to packaging materials, tableware materials, materials for construction, civil engineering, agriculture and gardening, car interior materials, materials for adsorbent, carriers and filter, and like materials.

Products made using biodegradable plastics, such as sheets, films, fibers, and injection-molded articles, have already been brought to the commercial stage domestically and abroad. Among plastic wastes, wastes of foamed plastics used in large amounts for packaging containers, buffer materials, cushioning materials and the like are bulky and hence call for a large lot for their burying or incineration. This leads to a serious social problem desired to solve. For this reason, various researches are being made on plastic foam products having biodegradability. Specifically, study has been hitherto made of extruded foam products and batch-processed foamed particles obtained from aliphatic polyester resins or mixed resins each comprising starch and plastics. With respect to the latter, study has been made of: foamed particles obtained by a process including allowing a biodegradable aliphatic polyester resin obtained by synthesis from a source material derived from petrol to react with diisocyanate to make the molecular weight of the reaction product high, thereby imparting the aliphatic polyester resin with improved foamability (see Japanese Patent Laid-Open Publication No. HEI 6-248106 and International Patent Laid-Open Publication No. 99/21915 pamphlet for example); and foamed particles obtained by crosslinking such a biodegradable aliphatic polyester resin (see International Patent Laid-Open Publication No. 99/21915 pamphlet and Japanese Patent Laid-Open Publications Nos. HEI 10-324766, 2001-49021, 2001-106821, 2001-288294 and HEI 9-263651 for example). However, molded foam products obtained from such aliphatic polyesters have a high shrinkage factor during molding or a limited processing condition range for ensuring conforming articles and hence lack practical utility. Further, since the crosslinking process using such a crosslinking agent as diisocyanate is required, such molded foam products require an increased production cost and hence are economically disadvantageous.

In recent years, increasing attention has been paid particularly to foamed particles formed from aliphatic polyesters derived from vegetable materials among biodegradable aliphatic polyester foamed particles that have heretofore been studied. For the reason stated earlier, foamed particles of P3HA resin are desired to develop. The inventors of the present invention prepared foamed particles by controlling the crystallinity of P3HA resin (see Japanese Patent Laid-Open Publication No. 2000-319438 for example). Japanese Patent Laid-Open Publication No. 2000-319438 describes a method of obtaining foamed particles having two melting points wherein poly(3-hydroxybutyrate-co-3-hydroxyhexanoate) (hereinafter will be abbreviated as "PHBH"), which is a kind of P3HA, is foamed in a pressure-resistant vessel with use of water and isobutane as a dispersion medium and a foaming agent, respectively. With this method, foamed particles of high quality having a high tension when melted and the like were obtained by crystallinity control with only one step of foaming without introducing a crosslinked structure requiring a crosslinking process. Further, it was possible to obtain a molded product of high quality by molding the resulting foamed particles.

Among P3HA resins, there are ultra-high-molecular-weight resins each having a molecular weight of not less than ten million (see Japanese Patent Laid-Open Publication No. HEI 10-176070 for example). Use of such a resin makes it possible to obtain a product having a molecular weight increased to such an extent as to be advantageous to foaming without need to introduce a crosslinked structure. However, depending upon the molecular weight of a base resin, some products do not foam at all, and some products foam but break foam because the membrane strength of resin is too low. In order to obtain satisfactory formability, it is important that a molecular weight range of a base resin having optimum melting properties is specified.

Regarding PHBH foamed particles and molded products thereof that have heretofore been studied, various specific conditions including an optimum molecular weight range have not been studied yet, though a molded product was obtained (see Japanese Patent Laid-Open Publication No. 2000-319438 for example). For this reason, problems remain unsolved, including post-shrinkage which occurs after molding and a limited processability range during molding. Therefore, improvements to solve these problems are desired.

Disclosure of Invention

It is an object of the present invention to provide: polyhydroxyalkanoate resin foamed particles of good quality having biodegradability; a molded product thereof; and a method of preparing such resin foamed particles.

The inventors of the present invention have conducted repeated intensive studies in order to solve the foregoing problems and, as a result, have found that use of P3HA having a weight-average molecular weight of 50,000 to 2,000,000 as a base resin provides for a satisfactory molded product comprising resin foamed particles which can be formed under molding conditions within wide ranges and which is not subject to post-shrinkage. Thus, the present invention has been completed.

According to a first aspect of the present invention, there is provided resin foamed particles comprising a foamed copolymer (hereinafter will be referred to as poly(3-hydroxyalkanoate) abbreviated as "P3HA") having a weight-average molecular weight ranging from 50,000 to 2,000,000, the poly(3-hydroxyalkanoate) having a recurring unit represented by the general formula (1):

$$[-CHR-CH_2-CO-O-] \qquad (1)$$

wherein R is an alkyl group represented by $C_nH_{2n+1}$, and n is an integer from 1 to 15. In a preferred embodiment of the resin foamed particles, the P3HA has a weight-average molecular weight ranging from 200,000 to 1,800,000. In a more preferred embodiment of the resin foamed particles, the P3HA is poly(3-hydroxybutyrate-co-3-hydroxyhexanoate) having the recurring unit wherein n is 1 and 3. Poly(3-hydroxybutyrate-co-3-hydroxyhexanoate) will be abbreviated as "PHBH". In a further preferred embodiment of the resin foamed particles, the PHBH comprises copolymerized components at a composition ratio of poly(3-hydroxybutyrate) to poly(3-hydroxyhexanoate) ranging from 99/1 to 80/20 (in molar ratio).

According to a second aspect of the present invention, there is provided a molded product of resin foamed particles, which is obtainable by a process comprising: charging a mold with resin foamed particles as recited above; and molding the resin foamed particles under heating.

According to a third aspect of the present invention, there is provided a method of preparing resin foamed particles as recited above, comprising the stops of: dispersing the P3HA as a base resin together with a dispersing agent in an aqueous dispersion medium within a closed vessel and then introducing a foaming agent into the closed vessel; and heating the resulting dispersion to a temperature not lower than a softening temperature of the base resin and then opening one end of the closed vessel and releasing the base resin and the aqueous dispersion medium into an atmosphere at a lower pressure than an internal pressure of the closed vessel to cause the base resin to foam.

Best Mode for Carrying Out the Invention

Hereinafter, the present invention will be described in more detail. Poly(3-hydroxyalkaoate) abbreviated as "P3HA" for use in the present invention is an aliphatic polyester having a recurring structure comprising 3-hydroxyalkanoate represented by the general formula (1):

$$[-CHR-CH_2-CO-O-] \qquad (1)$$

wherein R is an alkyl group represented by $C_nH_{2n+1}$, and n is an integer from 1 to 15.
Though there is no particular limitation on methods of preparing the P3HA to be used in the present invention, the P3HA is preferably derived from living things from the viewpoint of global environment conservation, more preferably from microorganisms in view of industrial productivity.

Examples of the P3HAs for use in the present invention include homopolymers of 3-hydroxyalkanoate defined above, copolymers each comprising a combination of two or more kinds of 3-hydroxyalkanoate which are different in the integer n from each other, such as di-copolymers, tri-copolymers and tetra-copolymers, or blends each comprising two or more species selected from these homopolymers and/or copolymers. Preferable ones of these P3HAs are: homopolymers including 3-hydroxybutyrate where n = 1, 3-hydroxyvalylate where n = 2, 3-hydroxyhexanoate where n = 3, 3-hydroxyoctanoate where n = 5, and 3-hydroxyoctadecanoate where n = 15; and copolymers each comprising a combination of two or more of these 3-hydroxyalkanoate units which are different in the integer n from each other, or blends thereof. Among these P3HAs, poly(3-hydroxybutyrate-co-3-hydroxyhexanoate), which is a copolymer of 3-hydroxybutyrate where n = 1 and 3-hydroxyhexanoate where n = 3, is more preferable from the view point of a wide range of physical property controllability. The composition ratio of 3-hydroxybutyrate to 3-hydroxyhexanoate in this copolymer preferably ranges from 99/1 to 80/20 (in molar ratio), more preferably from 98/2 to 82/18 (in molar ratio), further more preferably from 98/2 to 85/15 (in molar ratio). When the composition ratio of 3-hydroxybutyrate to 3-hydroxyhexanoate is more than 99/1, poly(3-hydroxybutyrate-co-3-hydroxyhexanoate) is not so different in melting point from a homopolymer polyhydroxybutyrate, hence, needs to be processed at elevated temperatures. For this reason, the molecular weight of poly(3-hydroxybutyrate-co-3-hydroxyhexanoate) sometimes decreases too much due to thermal decomposition during heat processing, which may result in a difficulty in quality control. When the composition ratio of 3-hydroxybutyrate to 3-hydroxyhexanoate is less than 80/20, a prolonged time is required for poly(3-hydroxybutyrate-co-3-hydroxyhexanoate) to recrystallize during heat processing, with the result that the productivity tends to lower.

The P3HA as defined above has a weight-average molecular weight (Mw) ranging from 50,000 to 2,000,000, preferably from 100,000 to 1,900,000, more preferably from 200,000 to 1,800,000, further more preferably from 300,000 to 1,300,000. When the weight-average molecular weight of the P3HA is less than 50,000, it is possible that the membrane strength of the resin cannot endure the foaming power working during foaming in the method of preparing resin foamed particles according to the present invention, to allow foam cells to break, thus resulting in a difficulty in obtaining a satisfactory foam product. When the weight-average molecular weight of the P3HA is more than 2,000,000, high expansion ratio is sometimes difficult to obtain because of low fluidity during foaming. The "weight-average molecular weight", as used above, is a weigh-average molecular weight (Mw) determined by a polystyrene-converted molecular weight distribution analysis by gel permeation chromatography (GPC) using a chloroform eluent.

Various additives may be added to the P3HA for use in the present invention unless the required performance of foamed particles to be obtained is impaired. The "additives", as used herein, is meant to include antioxidants, ultraviolet absorbing agents, coloring such as dyes or pigments, plasticizers, lubricants, crystallization nucleating agents, inorganic fillers, and the like, which can be used in accordance with the purposes. Among these additives, biodegradable additives are preferable. Examples of specific additives include: inorganic compounds such as silica, talc, calcium silicate, wollastonite, kaolin, clay, mica, zinc oxide, titanium oxide, and silicon oxide; fatty acid metal salts such as sodium stearate, magnesium stearate, calcium stearate, and barium stearate; liquid paraffin; olefin waxes; and stearylamide compounds. There is no limitation to these additives. When adjustment of the cell diameter of foamed particles is necessary, a cell controlling agent is added. Examples of such cell controlling agents include inorganic agents such as talc, silica, calcium silicate, calcium carbonate, aluminum oxide, titanium oxide, diatomaceous earth, clay, sodium hydrogen carbonate, alumina, barium sulfate, aluminum oxide and bentonite. The amount of such a cell controlling agent used is preferably 0.005 to 2 parts by weight relative to 100 parts by weight of the resin.

The following description is directed to the method of preparing the P3HA resin foamed particles according to the present invention. The method according to the present invention uses P3HA resin particles obtained by a process including: first, heating and melt-kneading a P3HA resin as a base resin by means of an extruder, kneader, Banbury mixer or rolls; and then forming the resin into a particle shape that is easily adaptable to the foaming process of the present invention, such as a circular cylinder, elliptic cylinder, sphere, cube, or rectangular parallelepiped. The weight of each particle is preferably not less than 0.1 mg, more preferably not less than 0.5 mg. Though there is no limitation on the upper limit value, the weight of each particle is preferably not more than 10 mg. When the weight is less than 0.1 mg, the preparation of P3HA resin particles, per se, is sometimes difficult.

The P3HA resin particles thus obtained, together with a dispersing agent, are dispersed in an aqueous dispersion medium within a closed vessel. Subsequently, a foaming agent is introduced into the closed vessel, followed by heating of the resulting dispersion to a temperature not lower than the softening temperature of the P3HA resin particles. When necessary, the dispersion is held at a temperature close to the foaming temperature for a fixed time period. Thereafter, one end of the closed vessel is opened and the P3HA resin particles and the aqueous dispersion medium are into an atmosphere at a lower pressure than the internal pressure of the closed vessel. In this way, the P3HA foamed are prepared.

The internal temperature and pressure of the closed vessel can be selected appropriately upon the types of resin particles and foaming agent used. For example, the internal temperature and pressure of the closed vessel are preferably 100 to 160°C and 1.0 to 4.0 MPa, more preferably 110 to 150°C and 1.2 to 3.5 MPa.

The aforementioned dispersing agent comprises a combination of an inorganic substance and an anionic surface-active agent. Examples of such inorganic substances include tribasic calcium phosphate, calcium pyrophosphate, kaolin, basic magnesium carbonate, aluminum oxide, and basic zinc carbonate. Examples of such anionic surface-active agents include sodium dodecylbenzenesulfonate, sodium α-olefinsulfonate, and sodium normal paraffinsulfonate. The amount of each of the inorganic substance and anionic surface-active agent to be added is simply within a range of usual usage without any particular limitation. The amount of the inorganic substance to be used is preferably 0.1 to 3.0 parts by weight, more preferably 0.2 to 2.5 parts by weight relative to 100 parts by weight of the P3HA resin. The amount of the anionic surface-active agent to be used is preferably 0.001 to 0.2 parts by weight, more preferably 0.01 to 0.1 parts by weight relative to 100 parts by weight of the P3HA resin. Usually, water is preferable as the dispersing medium from the viewpoints of economy and handleability, though there is no limitation thereto.

Examples of foaming agents as mentioned above include: saturated hydrocarbons each having 3 to 5 carbon atoms such as propane, normal butane, isobutane, normal pentane, isopentane, and neopentane; ethers such as dimethyl ether, diethyl ether, and methyl ethyl ether; halogenated hydrocarbons such as monochloromethane, dichloromethane, and dichlorodifluoroethane; inorganic gases such as carbon dioxide, nitrogen, and air; and water. At least one of them may be used. In view of environmental compatibility, foaming agents except halogenated hydrocarbons are preferable. In view of foaming properties and foam molding properties, saturated hydrocarbons each having 3 to 5 carbon atoms are preferable. Among these, isobutene is particularly preferable. The amount of the foaming agent to be used varies depending upon such factors as the intended expansion ratio of pre-foamed particles, the type of the foaming agent, the kind of the polyester resin, the ratio between the resin particles and the dispersing medium, the volume of the internal space of the vessel, and impregnating or foaming temperature. Usually, the amount of the foaming agent to be used is preferably 2 to 10,000 parts by weight, more preferably 5 to 1,000 parts by weight relative to 100 parts by weight of the P3HA resin particles. When the amount of the foaming agent is less than 2 parts by weight, there is a tendency not to attain a sufficient expansion ratio. When the amount of the foaming agent is more than 10,000 parts by weight, there is a tendency not to attain a degree of effect equivalent to the added amount, which is economically wasteful.

The expansion ratio of the P3HA resin foamed particles thus obtained according to the present invention is preferably 2 to 80 times, more preferably 5 to 60 times. When the expansion ratio is less than 2 times, the resin foamed particles tend to have a difficulty in exhibiting advantageous heat insulating properties and lightening effect, which are characteristic of foam products. When the expansion ratio is more than 80 times, the resin foamed particles tend to have very limited heat-molding conditions for their molding.

A molded resin foam product can be formed from the P3HA resin foamed particles thus prepared according to the above-described method by a process including: when necessary, aging the resin foamed particles under pressure using pressurized air to impart the particles with foamability; charging the resin foamed particles into a mold which can be closed but cannot be rendered airtight; and introducing water vapor into the mold to cause the resin foamed particles to be fused to each other by heat.

Examples

The present invention will be described in more detail by the following examples, which should not be construed to limit the present invention. In these examples, the term "part(s)" means part(s) by weight. Abbreviations are used as follows:

PHBH: poly(3-hydroxybutyrate-co-3-hydroxyhexanoate)
HH ratio: molar ratio (mol%) of hydroxyhexanoate in PHBH.

<Method of measuring the weight-average molecular weight of resin foamed particles>

The polystyrene-converted Mw of resin particles in the examples was measured by GPC analysis. The GPC equipment was CCP&8020 system (manufactured by TOSOH CORPORATION) using a column (manufactured by SHOWA DENKO K.K.). With the column temperature set to 40°C, 200 μl of a solution of 20 mg of each of PHBH resin particles A and PHBH foamed particles B in 10 ml of chloroform was injected into the column, to measure Mw.

< Method of measuring the expansion ratio of a molded resin foam product>

A measuring cylinder containing ethanol at 23°C was provided. A foamed particle group consisting of not less than 500 PHBH resin foamed particles B (having a weight W (g) as the weight of the foamed group) which had been allowed to stand for seven days under the conditions: relative humidity of 50%, 23°C and 1 atm and a molded PHBH resin foam product C cut to an appropriate size, were each immersed into the measuring cylinder by using a wire mesh or the like. The volume V ($cm^3$) of each of the foamed particle group and the molded product was measured by reading a respective rise in the water level of ethanol. The expansion ratio was given by the following expression:

$$\text{expansion ratio} = V/(W/\rho), \text{ where } \rho \text{ is a resin density (g/cm}^3).$$

<Melting point of resin foamed particles>

The melting point of the PHBH resin particles in the examples was measured by differential scanning calorimetry wherein: about 5 mg of the PHBH resin particles was weighed accurately; the temperature of the resin particles was raised from 0°C to 200°C at a heating rate of 10°C/min to obtain a DCS curve by means of a differential scanning calorimeter (SSC5200 manufactured by Seiko Instruments Inc.); a peak temperature of a resulting endothermic curve was defined as a melting point Tm. (In cases where plural peak temperatures appeared, a higher melting peak temperature and a lower melting peak temperature were represented by $Tm^1$ and $Tm^2$, respectively.)

<Biodegradability of PHBH resin foamed particies>

P3HA resin foamed particles in the examples were buried into the soil to a depth of 10 cm for six months and, thereafter, observation was made to check changes in particle shape in order to evaluate the biodegradability of the particles according to the following standard:

A: substantially degraded to such an extent that the original shape can hardly be observed; and
C: not degraded with little change in the shape of the foamed particles.

Example 1

PHBH (HH ratio: 8 mol%) was used which had been produced using microorganisms named Alcaligenes eutrophus AC32 (deposition No. FERM BP-6038 (transferred from the original deposition (FERM P-15786) on August 12, 1996) (August 7, 1997 in INTERNATIONAL PATENT ORGANISM of INSTITUTE OF ADVANCED INDUSTRIAL SCIENCE AND TECHNOLOGY, address: Chuo 6th, Higashi 1-1-1, Tukuba-city, Ibaragi, Japan) (J. Bacteriol., 179,4821 (1997)), under appropriately adjusted culture conditions with an appropriately selected source material. Alcaligenes eutrophus AC32 was produced by introduction of a PHA synthesizing enzyme gene derived from Aeromonas caviae into Alcaligenes eutrophus. PHBH was melt-kneaded using a uniaxial extruder of 35 mm diameter provided with a kneader (LABO UNIVERSAL EXTRUDER manufactured by KASAMATSU KAKOH CO.) at a cylinder temperature of 145°C, and a strand of PHBH extruded from a small-orifice die of 3 mm diameter mounted at the front end of the extruder was cut into particles by means of a pelletizer. In this way, PHBH resin particles A (Mw = 800,000) having a particle weight of 5 mg were prepared.

A 10L pressure-resistant vessel was charged with 100 parts by weight of the resin particles A thus prepared and 1 part by weight of tribasic calcium phosphate as a dispersing agent and then 25 parts by weight of isobutane as a foaming agent was added to the vessel, followed by stirring. Subsequently, the vessel was heated until its internal temperature reached 123°C (foaming temperature) and then the internal pressure of the vessel was held at 2.5 MPa for one hour. Thereafter, the resulting dispersion was released to under the atmospheric pressure from the vessel through a small-orifice nozzle located on a bottom portion of the vessel, to cause the resin particles to foam. In this way, PHBH resin foamed particles B were obtained which had an expansion ratio of 11 times and a crystal structure having two melting points of 150°C ($Tm^1$) and 128°C ($Tm^2$) determined from a DSC curve obtained by a differential scanning calorimetry.

The PHBH resin foamed particles B were charged into a mold having a size of 300x400x30 mm, water vapor at 0.13 to 0.20 MPa (gauge pressure) was introduced into the mold, and the PHBH resin foamed particles B were heated so as to be fused to each other, thus yielding a molded PHBH resin foam product C having an expansion ratio of 12 times. The results are shown in Table 1.

[Table 1]

|  | Example 1 | Comparative Example 1 | Comparative Example 2 |
|---|---|---|---|
| PHBH particles A (part by weight) | 100 | 100 | 100 |
| Mw (ten thousand) of PHBH particles A | 80 | 1 | 450 |
| Isobutane (part by weight) | 25 | 25 | 25 |
| Expansion ratio (times) of particles B | 11 | Cells broken | Unfoamed |

(continued)

|  | Example 1 | Comparative Example 1 | Comparative Example 2 |
|---|---|---|---|
| Expansion ratio (times) of molded articles C | 12 | - | - |
| B indegradability | A | A | A |

Comparative Example 1

Comparative example 1 was carried out in the manner as in example 1 that PHBH resin particles A having a weight-average molecular weight of 10,000 were used. Resulting PHBH resin foamed particles B had foamed cells broken. For this reason, a molded PHBH resin foam product C was not obtained. (This fact is represented by "-" in Table 1.) The biodegradability of the PHBH resin foamed particles B was satisfactory. The results of comparative example 1 are shown in Table 1.

Comparative Example 2

Comparative example 2 was carried out in the same manner as in example 1 except that PHBH resin particles A having a weight-average molecular weight of 4,500,000 were used. In obtaining the PHBH resin particles A, considerable melt fracture occurred in a melt-extruded strand and such a melt-extruded strand broke at some midpoints when drawn by the pelletizer, which made it difficult to cut the strand continuously. The PHBH resin particles A thus obtained were non-uniform in particle shape, and the PHBH resin foamed particles B obtained from the resin particles A were all unfoamed. For this reason, a molded PHBH resin foam product C was not obtained. (This fact is represented by "-" in Table 1.) The biodegradability of the PHBH resin foamed particles B was satisfactory. The results of comparative example 2 are shown in Table 1.

Industrial Applicability

According to the present invention, it is possible to obtain resin foamed particles having excellent heat resistance and water resistance that are difficult to attain by the aforementioned chemically synthesized type aliphatic polyesters or natural polymers such as starch, as well as an excellent environmental compatibility derived from vegetables. Also, the present invention makes it possible to provide a composition and molded product which can be degraded by the activity of microorganisms or the like under any disposal condition, whether aerobic or anaerobic and which can return to the global carbon cycle. The composition and molded product are derived from vegetables resulting from active fixation of carbon dioxide on Earth and hence is expected to contribute to global warming prevention. Further, the present invention makes it possible to provide an economical preparation method including a foamed particle preparation process which is easy to carry out.

**Claims**

1. Resin foamed particles comprising a foamed copolymer comprising poly(3-hydroxyalkanoate) having a weight-average molecular weight ranging from 50,000 to 2,000,000, said poly(3-hydroxyalkanoate) having a repeating monomer unit represented by the general formula (1):

$$[-CHR-CH_2-CO-O-] \qquad (1)$$

wherein R is an alkyl group represented by $C_nH_{2n+1}$, and n is an integer from 1 to 15.

2. The resin foamed particles according to claim 1, wherein said poly(3-hydroxyalkanoate) has a weight-average molecular weight ranging from 200,000 to 1,800,000.

3. The resin foamed particles according to claim 1 or 2, wherein said poly(3-hydroxyalkanoate) is poly(3-hydroxybutyrate-co-3-hydroxyhexanoate) having said repeating monomer unit wherein n is 1 and 3.

4. The resin foamed particles according to claim 3, wherein said poly(3-hydroxybutyrate-co-3-hydroxyhexanoate) comprises copolymerized components at a composition ratio of poly(3-hydroxybutyrate) to poly(3-hydroxyhexanoate) ranging from 99/1 to 80/20 (in molar ratio).

5. A molded product of resin foamed particles, which is obtainable by a process comprising: charging a mold with resin foamed particles according to any one of claims 1 to 4; and molding the resin foamed particles under heating.

6. A method of preparing resin foamed particles according to any one of claims 1 to 4, comprising the steps of: dispersing poly(3-hydroxyalkanoate) as a base resin together with a dispersing agent in an aqueous dispersion medium within a closed vessel and then introducing a foaming agent into said closed vessel; and heating the resulting dispersion to a temperature not lower than a softening temperature of said base resin and then opening one end of said closed vessel and releasing said base resin and said aqueous dispersion medium into an atmosphere at a lower pressure than an internal pressure of said closed vessel to cause said base resin to foam.

**EP 1 867 677 A1**

<table>
<tr><td colspan="2"><strong>INTERNATIONAL SEARCH REPORT</strong></td><td>International application No.<br>PCT/JP2006/305530</td></tr>
</table>

A.  CLASSIFICATION OF SUBJECT MATTER
*C08J9/18*(2006.01), *C08J9/232*(2006.01), *C08L101/16*(2006.01)

According to International Patent Classification (IPC) or to both national classification and IPC

B.  FIELDS SEARCHED

Minimum documentation searched (classification system followed by classification symbols)
B29C44/00, B29/C67/20, C08J9/16-9/20, C08J9/228-9/236, C08L101/16

Documentation searched other than minimum documentation to the extent that such documents are included in the fields searched
Jitsuyo Shinan Koho        1922-1996   Jitsuyo Shinan Toroku Koho    1996-2006
Kokai Jitsuyo Shinan Koho  1971-2006   Toroku Jitsuyo Shinan Koho    1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2000-319438 A  (KANEKA Corp.),<br>21 November, 2000 (21.11.00),<br>Full text<br>(Family: none) | 1-6<br>6 |
| X<br>Y | WO 1995/020615 A1  (The Procter & Gamble Co.),<br>03 August, 1995 (03.08.95),<br>Claims; page 24, line 24 to page 26, line 36;<br>examples 12 to 13<br>& US 5502116 A1        & EP 741753 A1 | 1-5<br>6 |

☐  Further documents are listed in the continuation of Box C.        ☐  See patent family annex.

*    Special categories of cited documents:
"A"  document defining the general state of the art which is not considered   to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search<br>08 May, 2006 (08.05.06) | Date of mailing of the international search report<br>16 May, 2006 (16.05.06) |
|---|---|
| Name and mailing address of the ISA/<br>Japanese Patent Office | Authorized officer |
| Facsimile No. | Telephone No. |

Form PCT/ISA/210 (second sheet) (April 2005)

9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6248106 A
- JP 11021915 A
- JP 10324766 A
- JP 2001049021 A
- JP 2001106821 A
- JP 2001288294 A
- JP 9263651 A
- JP 2000319438 A
- JP 10176070 A